# EUROPÄISCHE PATENTSCHRIFT

(11) **EP 1 901 037 B1**
(45) Veröffentlichungstag und Bekanntmachung des Hinweises auf die Patenterteilung: **14.02.2018**
(21) Anmeldenummer: 07116107.9
(22) Anmeldetag: 11.09.2007
(51) Int. Cl.: G01C 21/34

(54) **Verfahren zur Bestimmung einer Fahrzeit**
Method for determining driving time
Procédé de détermination d'une durée de conduite

(30) Priorität: 13.09.2006 DE 102006043754
(43) Veröffentlichungstag der Anmeldung: 19.03.2008
(73) Patentinhaber: Continental Automotive GmbH, 30165 Hannover (DE)
(72) Erfinder: Lützner, Jörg, 85551, Kirchheim (DE); Schoen, Stefan, 85635, Höhenkirchen (DE); Schönke, Klaus, 93326, Abensberg (DE)

(56) Entgegenhaltungen:
- EP-A1- 1 162 586
- EP-A1- 1 669 719
- DE-A1- 10 012 952
- DE-A1- 19 810 772
- DE-A1- 19 933 345
- JP-A- 2005 283 272

## Beschreibung

Die Erfindung betrifft ein Verfahren zur Bestimmung einer Fahrzeit zwischen einem Start- und einem Zielort mittels eines Navigationssystems eines Nutzfahrzeuges.
Verfahren und Navigationssysteme zur Bestimmung einer Fahrzeit zwischen einem Start- und Zielort sind aus dem Stand der Technik bekannt. Die Bestimmung erfolgt, indem verschiedenen Straßenklassen eine durchschnittliche Reisezeit zugeordnet wird. Staus und stockender Verkehr, sofern im System durch z. B. ein RDS-TMC-Empfänger erfasst, können bei der Bestimmung der Fahrzeit durch zusätzliche Zeitaufschläge berücksichtigt werden.

Für Nutzfahrzeuge gelten spezielle Bedingungen, die von den momentan bekannten Navigationssystemen nicht beachtet werden. Hierdurch kann bei einem Einsatz dieser Navigationssysteme in einem Nutzfahrzeug die mittels dieser Navigationssysteme bestimmte Fahrzeit erheblich von der tatsächlichen Fahrzeit abweichen.

Die EP 1 162 586 A1 beschreibt ein Verfahren zum Auswerten von Verkehrsinformationen, bei dem einem Kraftfahrer eine Pause empfohlen wird, wenn ein Verkehrsstau eine Weiterfahrt zum beabsichtigten Ziel verhindert. Hierbei kann der Kraftfahrer eine Mindestpause vorgeben.

Die DE 199 33 345 A1 beschreibt ein Verfahren zur Routenplanung, bei dem die Route derart berechnet wird, dass nach einer vom Fahrer eingegebenen maximalen Fahr- oder Lenkzeit eine Unterbrechung der Fahrt eingeplant wird. Die EP 1 660 719 A1 beschreibt ein Routensuchverfahren und ein Routensuchgerät, bei dem im Voraus mehrere geplante Aktivitäten und örtliche Ziele planbar sind, wobei eine Abfolge dieser örtlichen Ziele und geplante Aktivitäten auf einer Anzeige darstellbar ist und wobei auf dieser Anzeige gleichzeitig ein oder mehrere Alternativen der möglichen zeitlichen und örtlichen Abfolge darstellbar sind. So können beispielsweise touristische Besuchsprogramme im Voraus geplant werden.

Es ist daher Aufgabe dieser Erfindung ein Verfahren und ein Navigationssystem zur Verfügung zu stellen, welche eine verlässliche Bestimmung einer Fahrzeit auch für Nutzfahrzeuge ermöglichen.

Die Aufgabe wird erfindungsgemäß durch ein Verfahren mit den Merkmalen des Anspruchs 1 gelöst. Der Fahrer eines Nutzfahrzeuges muss nach einer bestimmten Lenkzeit gemäß existierender Vorschriften gesetzlich vorgeschriebene Pausenzeiten einhalten. Die Pausenzeiten hängen dabei von der Lenkzeit ab. Durch die Berücksichtigung der gesetzlich vorgeschriebenen Pausenzeiten wird die Übereinstimmung zwischen der mit dem Navigationssystem bestimmten und der tatsächlichen Fahrzeit gegenüber den bekannten Systemen erheblich verbessert. Da anhand der Fahrzeit eine Ermittlung der Ankunftszeit erfolgt, wird somit auch die Übereinstimmung zwischen der mit dem Navigationssystem bestimmten und der tatsächlichen Ankunftszeit gegenüber den bekannten Systemen erheblich verbessert. So können z. B. die gesetzlich vorgeschriebenen Pausenzeiten bei langen Fahrten bis zu 11 Stunden betragen.

Erfindungsgemäß ist weiterhin vorgesehen, dass für die Bestimmung der Fahrzeit durch das Navigationssystem vorher absolvierte Lenk- und Pausenzeiten berücksichtigt werden. Unter vorher absolvierte Lenk- und Pausenzeiten sind vor dem Zeitpunkt der Bestimmung der Fahrzeit durch das Navigationssystem angefallene Lenk- und Pausenzeiten zu verstehen. Da die vorher absolvierten Lenk- und Pausenzeiten die gesetzlich vorgeschriebenen Pausenzeiten beeinflussen, wird durch diese Ausbildung eine besonders gute Übereinstimmung zwischen der durch das Navigationssystem bestimmten und der tatsächlichen Fahrzeit erzielt.

Dadurch dass die vorher absolvierten Lenk- und Pausenzeiten vom digitalen Tachographen zum Navigationssystem übertragen werden, entfällt die manuelle Eingabe. Der Fahrer des Nutzfahrzeuges wird entlastet.

Die Angabe von unsinnigen Fahrzeiten und unsinnigen Ankunftszeiten, welche die Reputation des Herstellers des Navigationssystems schädigen können, werden hierdurch vermieden. Des Weiteren bedeutet die Erfindung eine Erleichterung für einen Fahrer des Nutzfahrzeuges, da er die Ankunftszeit aufgrund der Berücksichtigung der gesetzlich vorgeschriebenen Pausen-zeiten durch das Navigationssystem, nicht mehr selbst ermitteln muss.

Als Nutzfahrzeuge im Sinne dieser Erfindung sind alle Fahrzeuge zu verstehen, für dessen Fahrer gesetzlich vorgeschriebene Pausenzeiten existieren (z. B. Lastkraftwagen oder Busse).

In einer Weiterbildung der Erfindung ist vorgesehen, dass die Fahrzeit anhand der Summe einer Lenkzeit und einer gesetzlich vorgeschriebenen Pausenzeit bestimmt wird. Zur Definition von Lenkzeit und Pausenzeit sei an dieser Stelle auf existierende gesetzliche Vorschriften verwiesen. Die gesetzlich vorgeschriebenen Pausenzeiten werden oftmals auch als Ruhezeiten bezeichnet. Die Bestimmung der Fahrzeit gemäß dieser Weiterbildung kann einfach durchgeführt werden.

In einer anderen Weiterbildung werden Daten zwischen dem Navigationssystem und einem in dem Nutzfahrzeug vorhandenen digitalen Tachographen übertragen. Durch die automatische Übertragung von Daten zwischen dem Navigationssystem und dem digitalen Tachographen kann die manuelle Eingabe von Daten, welche für die Bestimmung der Fahrzeit relevant sind, entfallen.

Insbesondere ist vorgesehen, dass ein Wechsel eines Fahrers des Nutzfahrzeuges bei der Bestimmung der Fahrzeit berücksichtigt wird. Durch einen Fahrerwechsel können gesetzlich vorgeschriebene Pausenzeiten vermieden werden. Durch die Berücksichtigung eines Fahrerwechsels durch das Navigationssystem werden große Abweichungen zwischen der bestimmten und der tatsächlichen Fahrzeit vermieden.

In einer weiteren Ausgestaltung der Erfindung werden die Fahrzeit, die Lenkzeit und die Pausenzeit auf einer Ausgabeeinheit des Navigationssystems angezeigt. Der Fahrer wird hierdurch über die einzelnen Zeiten, die zur Fahrzeit beitragen, und deren Anteil an der Fahrzeit informiert.

In einer weiteren Ausgestaltung der Erfindung wird die Ankunftszeit auf einer Ausgabeeinheit des Navigationssystems angezeigt. Der Fahrer wird hierdurch über den Zeitpunkt des Eintreffens am Zielort informiert.

In einer Weiterbildung wird die Fahrzeit anhand der für verschiedene Straßenklassen geltende durchschnittliche Geschwindigkeit des Nutzfahrzeuges ermittelt. Hierdurch wird eine besonders gute Übereinstimmung zwischen der durch das Navigationssystem bestimmten und der tatsächlichen Fahrzeit erzielt.

Die Erfindung wird nachfolgend anhand eines Ausführungsbeispiels und der Zeichnung näher erläutert. Es zeigen:
- Figur 1: ein Navigationssystem eines Nutzfahrzeuges, welches mit einem digitalen Tachographen verbunden ist und
- Figur 2: einen Verfahrensablauf eines erfindungsgemäßen Verfahrens.

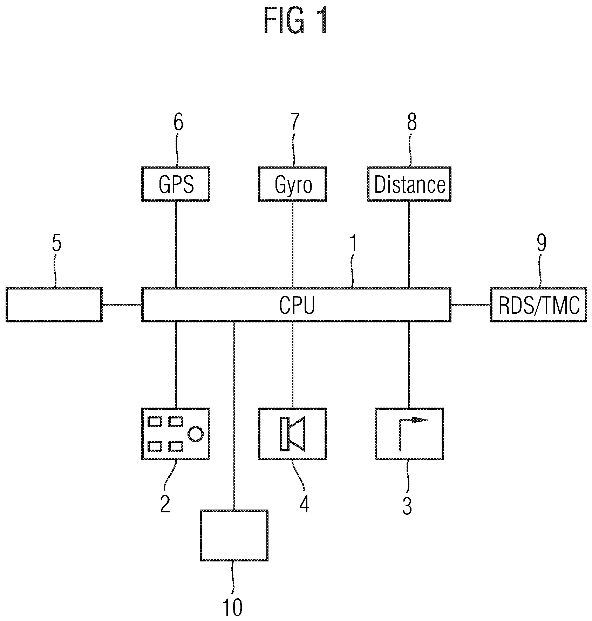

In Figur 1 sind die Komponenten eines Navigationssystems für Nutzfahrzeuge schematisch dargestellt. Zentraler Bestandteil des Navigationssystems ist die Recheneinheit (CPU) 1, die auch Speicherelemente enthält. Mit der CPU 1 ist eine Bedieneinheit 2 verbunden, über die beispielsweise der Zielort eingegeben oder ausgewählt werden kann. Die Bedieneinheit 2 enthält dazu beispielsweise ein oder mehrere Bedienelemente zur Steuerung eines Cursors. Die Bedieneinheit 2 kann im gleichen Gehäuse wie die CPU 1 untergebracht sein, jedoch kann die Bedieneinheit 2 auch als Fernbedienung ausgebildet sein, die mit der CPU 1 beispielsweise über eine optische Schnittstelle oder eine Funkschnittstelle in Verbindung steht.

Mit der CPU 1 ist eine optische Ausgabeeinheit 3 verbunden, über die eine Kartendarstellung, Zielführungsinformationen, Fahrzeiten sowie sonstige Informationen ausgegeben werden können. Die Zielführungsinformationen können weiterhin über einen Lautsprecher 4 akustisch ausgegeben werden.

Die CPU 1 ist ferner mit einem Speicher 5 verbunden, der die Landkartendaten und gesetzlich vorgeschriebene Pausenzeiten enthält. Diese Daten sind beispielsweise auf einer CD-ROM, einer DVD oder einer SD-Karte abgespeichert. In diesem Falle enthält das Navigationssystem ein CD-ROM- bzw. DVD-Laufwerk oder einen SD-Kartenleser welche mit der CPU 1 verbunden sind. Anhand der Landkartendaten und der gesetzlich vorgeschriebenen Pausenzeiten kann von der CPU 1 bei bekanntem Start- und Zielort in erfindungsgemäßer Weise eine Bestimmung der Fahrzeit und der Ankunftszeit durchgeführt werden, die dann über die optische Ausgabeeinheit 3 ausgegeben werden kann.

Zur Bestimmung der aktuellen Fahrzeugposition enthält das Navigationssystem ferner einen Empfänger 6 zum Empfang von Navigationssignalen. Um eine von Satelliten unabhängige Positionsbestimmung durchführen zu können, enthält das Navigationssystem ferner einen Richtungssensor 7 und einen Wegsensor 8, die ebenfalls mit der CPU 1 verbunden sind, so dass mit Hilfe eines geeigneten Computerprogramms mit diesen Signalen eine Positionsbestimmung möglich ist.

Ferner ist die CPU 1 im dargestellten Beispiel zusätzlich mit einem Rundfunkempfänger 9 verbunden, der zum Empfang von RDS-TMC-Signalen ausgebildet ist. Somit können empfangene Verkehrsinformationen vom Rundfunkempfänger 9 an die CPU 1 weitergeleitet und zur Berücksichtigung bei der Bestimmung der Fahrzeit und bei der Routenberechnung herangezogen werden. Alternativ können Verkehrsinformationen auch über ein Mobilfunkgerät, insbesondere nach dem GSM-Standard, empfangen und an die Recheneinheit weitergeleitet werden.

Abweichend von dem beschriebenen Navigationssystem können die Landkartendaten und die gesetzlich vorgeschriebenen Pausenzeiten auch über das Mobilfunkgerät von einer zentralen Servicestelle in das Fahrzeug übertragen werden. In diesem Falle kann ein Lesegerät für ein Speichermedium mit den Landkartendaten und den gesetzlich vorgeschriebenen Pausenzeiten im Fahrzeug entfallen. Entsprechende Navigationssysteme sind prinzipiell bekannt.

Weiterhin ist die CPU 1 über eine Datenverbindung mit einem in einem Nutzfahrzeug vorhandenen digitalen Tachographen 10 verbunden. Über die Datenverbindung werden für die Bestimmung der Fahrzeit relevante Daten, wie z. B. vorher absolvierte Lenk- und/oder Pausenzeiten oder Daten betreffend einen Fahrerwechsel übertragen. Diese Daten werden dann bei der Bestimmung der Fahrzeit berücksichtigt.

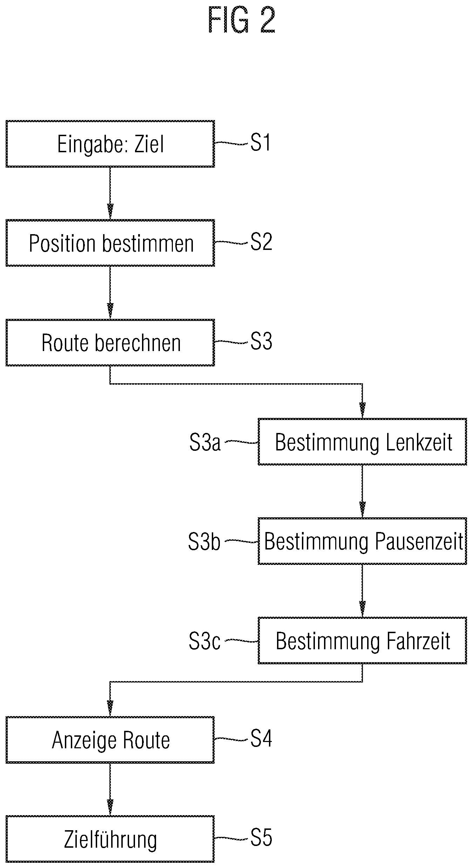

In der CPU 1 wird unter anderem die Fahrzeit in erfindungsgemäßer Weise berechnet. Ein entsprechender Algorithmus wird anhand von Figur 2 erläutert. In Schritt S1 gibt der Fahrer zunächst den gewünschten Zielort über die Eingabeeinheit 2 in das Navigationssystem ein oder wählt den Zielort aus einer Liste des Navigationssystems aus.

In Schritt S2 wird die Fahrzeugposition bestimmt. Dies erfolgt in der Regel durch Auswertung der vom Empfänger 6 gelieferten Satellitennavigationssignale. In Schritt S3 wird eine Route zwischen der aktuellen Position (Startort) und dem Zielort berechnet. Der Schritt S3, die Berechnung der Route, umfasst die Unterschritte S3a bis S3c. In Schritt S3a erfolgt die Bestimmung der Lenkzeit anhand von der für verschiedene Straßenklassen geltende durchschnittliche Geschwindigkeit des Nutzfahrzeuges. Anhand der Lenkzeit und vorher absolvierten Lenk- und Pausenzeiten erfolgt in Schritt S3b die Bestimmung der gesetzlich vorgeschriebenen Pausenzeit. Hierzu wird ein Vergleich der in Schritt S3 ermittelten Lenkzeit mit einer in dem Speicher 10 abgelegten Tabelle, welche die gesetzlich vorgeschriebenen Pausenzeiten in Abhängigkeit der Lenkzeiten beinhaltetq, durchgeführt. Schließlich wird in Schritt S3c die Fahrzeit anhand der Summe aus der Lenk- und der gesetzlich vorgeschriebenen Pausenzeit ermittelt.

In Schritt S4 wird die Route einschließlich der bestimmten Fahr-, Lenk- und Pausenzeit und der Ankunftszeit auf der optischen Ausgabeeinheit 3 angezeigt. In Schritt S5 erfolgt die Ausgabe von Zielführungsinformationen, wie dies von herkömmlichen Navigationssystemen her bekannt ist.

## Patentansprüche

1. Verfahren zur Bestimmung einer Fahrzeit zwischen einem Start- und einem Zielort mittels eines Navigationssystems eines Nutzfahrzeuges, **dadurch gekennzeichnet, dass** bei der Bestimmung der Fahrzeit gesetzlich vorgeschriebene Pausenzeiten berücksichtigt werden, dass für die Bestimmung der Fahrzeit durch das Navigationssystem vorher absolvierte Lenk- und Pausenzeiten berücksichtigt werden, wobei unter vorher absolvierte Lenk- und Pausenzeiten vor dem Zeitpunkt der Bestimmung der Fahrzeit durch das Navigationssystem angefallene Lenk- und Pausenzeiten zu verstehen sind, dass Daten zwischen dem Navigationssystem und einem in dem Nutzfahrzeug vorhandenen digitalen Tachographen (10) übertragen werden, dass die vorher absolvierten Lenk- und/oder Pausenzeiten vom digitalen Tachographen (10) zum Navigationssystem übertragen werden.

2. Verfahren nach Anspruch 1, **dadurch gekennzeichnet, dass** die Fahrzeit anhand der Summe einer Lenkzeit und einer gesetzlich vorgeschriebenen Pausenzeit bestimmt wird.

3. Verfahren nach Anspruch 1 oder 2, **dadurch gekennzeichnet, dass** ein Wechsel eines Fahrers des Nutzfahrzeuges bei der Bestimmung der Fahrzeit berücksichtigt wird.

4. Verfahren nach einem der vorstehenden Ansprüche, **dadurch gekennzeichnet, dass** die Fahrzeit, die Lenkzeit und die Pausenzeit auf einer Ausgabeeinheit (3) des Navigationssystems angezeigt werden.

5. Verfahren nach einem der vorstehenden Ansprüche, **dadurch gekennzeichnet, dass** die Ankunftszeit auf einer Ausgabeeinheit (3) des Navigationssystems angezeigt wird.

6. Verfahren nach einem der vorstehenden Ansprüche, **dadurch gekennzeichnet, dass** die Fahrzeit anhand der für verschiedene Straßenklassen geltende durchschnittliche Geschwindigkeit des Nutzfahrzeuges ermittelt wird.

## Claims

1. Method for determining a travel time between a starting location and a destination by means of a navigation system of a utility vehicle, **characterized in that** legally prescribed brake times are taken into account during the determination of the travel time, **in that** previously implemented steering times and brake times are taken into account for the determination of the travel time by the navigation system, wherein previously implemented steering times and brake times are to be understood as steering times and brake times which have occurred before the time when the travel time is determined by the navigation system, **in that** data is transmitted between the navigation system and a digital tachograph (10) which is present in the utility vehicle, and **in that** the previously implemented steering times and/or brake times are transmitted from the digital tachograph (10) to the navigation system.

2. Method according to Claim 1, **characterized in that** the travel time is determined on the basis of the sum of the steering time and a legally prescribed brake time.

3. Method according to Claim 1 or 2, **characterized in that** a changeover of a driver of the utility vehicle is taken into account in the determination of the travel time.

4. Method according to one of the preceding claims, **characterized in that** the travel time, the steering time and the brake time are displayed on an output unit (3) of the navigation system.

5. Method according to one of the preceding claims, **characterized in that** the arrival time is displayed on an output unit (3) of the navigation system.

6. Method according to one of the preceding claims, **characterized in that** the travel time is determined on the basis of the average speed of the utility vehicle which applies to various classes of road.

## Revendications

1. Procédé de détermination d'un temps de déplacement entre un lieu de départ et un lieu de destination au moyen d'un système de navigation d'un véhicule utilitaire, **caractérisé en ce que** des temps de pause prescrits par la loi sont pris en compte lors de la détermination du temps de déplacement, **en ce que** des temps de conduite et de pause préalablement effectués sont pris en compte pour la détermination du temps de déplacement, dans lequel des temps de conduite et de pause doivent être compris par le système de navigation comme étant des temps de conduite et de pause préalablement effectués avant l'instant de la détermination du temps de déplacement par le système de navigation, **en ce que** des données sont transmises entre le système de navigation et un tachygraphe numérique (10) prévu dans le véhicule utilitaire, **en ce que** les temps de conduite et/ou de pause préalablement effectués sont transmis du tachygraphe numérique (10) au système de navigation.

2. Procédé selon la revendication 1, **caractérisé en ce que** le temps de déplacement est déterminé sur la base de la somme d'un temps de conduite et d'un temps de pause prescrit par la loi.

3. Procédé selon la revendication 1 ou 2, **caractérisé en ce qu'**un remplacement d'un conducteur du véhicule utilitaire est pris en compte lors de la détermination du temps de déplacement.

4. Procédé selon l'une quelconque des revendications précédentes, **caractérisé en ce que** le temps de déplacement, le temps de conduite et le temps de pause sont affichés sur une unité de sortie (3) du système de navigation.

5. Procédé selon l'une quelconque des revendications précédentes, **caractérisé en ce que** le temps d'arrivée est affiché sur une unité de sortie (3) du système de navigation.

6. Procédé selon l'une quelconque des revendications précédentes, **caractérisé en ce que** le temps de déplacement est obtenu sur la base de la vitesse moyenne du véhicule utilitaire applicable à différentes classes de rues.
